# EUROPEAN PATENT APPLICATION

(11) **EP 1 959 618 A2**
(43) Date of publication of application: **20.08.2008**
(21) Application number: 08002959.8
(22) Date of filing: 18.02.2008
(51) Int. Cl.: H04L 12/56

(54) **Method and apparatus for enhancing system efficiency in a wireless communications system**

(30) Priority: 16.02.2007 US 890192 P
(71) Applicant: Innovative Sonic Limited, Tortola (VG)
(72) Inventor: Jen, Yu-Chih, Taipei City (TW)
(74) Representative: Weber, Joachim

(57) **Abstract**

A method for enhancing system efficiency in a wireless communications system includes allocating a plurality of common H-RNTIs to a plurality of UEs groups each comprising zero or at least one UE (302), and each UE of a UE group maintaining, acquiring, or being assigned, configured, or signalled a common H-RNTI of the plurality of common H-RNTIs when the UE group operates in a CELL_FACH state (304).

## Description

This application claims the benefit of U.S. Provisional Application No. 60/890,192, filed on Feb 16, 2007 and entitled "Handling transition of Enhanced CELL_FACH state HSDPA and Improvement of CELL_FACH operation," the contents of which are incorporated herein by reference.

The present invention relates to a method and apparatus for enhancing system efficiency in a wireless communications system according to the pre-characterizing clauses of claims 1, 4, 7, 12, 15, 18, 21, and 26.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting at the third generation mobile telecommunication technology, the prior art provides High Speed Package Access (HSPA) technology, which includes High Speed Downlink Package Access (HSDPA) and High Speed Uplink Package Access (HSUPA), to increase bandwidth utility rate and package data processing efficiency to improve uplink/downlink transmission rate.

For an HSDPA UE, physical channels include a high speed physical downlink shared channel (HS-PDSCH), for transferring payload data, and a high speed physical control channel (HS-DPCCH) for uploading an acknowledgement/negative acknowledgement (ACK/NACK) and a channel quality identifier (CQI). As for the media access control (MAC) layer of the HSDPA UE, a MAC-hs entity utilizes a transport channel of High Speed Downlink Shared Channel (HS-DSCH) for receiving data from the physical layer. In addition, a shared control channel for HS-DSCH (HS-SCCH) is used as a physical downlink channel, responsible for transmission of control signals corresponding to HS-DSCH, such as demodulation information.

In addition, RRC states contain an idle mode and an RRC connected mode, and the RRC connected mode includes CELL_PCH, URA_PCH, CELL_FACH and CELL_DCH states.

In CELL_FACH, the transmission route of downlink data and control signaling is from CTCH (Common Traffic Channel) and CCCH (Common Control Channel) and/or DTCH (Dedicated Traffic Channel) and DCCH (Dedicated Control Channel), provided by RLC (Radio Link Control) layer, via FACH (Forward Link Access Channel), provided by MAC, to S-CCPCH (Secondary-Common Control Physical Channel), provided by PHY (Physical) layer. Except CELL_DCH, the prior art also adds HSDPA-like functions into CELL_FACH, CELL_PCH, or URA_PCH state, to enhance efficiency of CELL_FACH, CELL_PCH, or URA_PCH state. Therefore, UE in CELL_FACH can use HS-DSCH on specified channels (BCCH, CCCH, DCCH and DTCH), so as to improve peak data rate, signaling delay, state transition delay, download times and flexible cell capacity in CELL_FACH. In such a situation, FACH and S-CCPCH in downlink transmission are replaced by HS-DSCH and HS-PDSCH.

There are two schemes to trigger HSDPA in CELL_FACH in the prior art. One is system information broadcast, which enables HS-DSCH reception in CELL_FACH state via HS-SCCH and HS-DSCH configuration and a common HS-DSCH radio network transaction identifier (common H-RNTI), and uses MAC-c PDU (Protocol Data Unit) as MAC-hs SDU (Service Data Unit). The other is to use a dedicated H-RNTI for HS-DSCH reception in CELL_FACH state, and use MAC-d or MAC-c PDU as MAC-hs SDU. However, the above schemes induce different problems.

First, it's quite reasonable to use a common H-RNTI and MAC-c PDU as MAC-hs SDU for CCCH/CTCH transmission since multiple UEs' data can be multiplexed in a single HS-DSCH TTI and Node B doesn't need to maintain UE information for CELL_FACH state even though sometimes it's preferable to have several common H-RNTIs to make UEs into a service/class group. However, for DCCH/DTCH transmission, there may be several disadvantages to use MAC-c PDU as MAC-hs SDU and/or common H-RNTI.

When common H-RNTI (or equivalent to U-RNTI) is used for DCCH/DTCH transmission in a HS-SCCH frame, all UEs in CELL-FACH state need to decode corresponding HS-PDSCH, which can cause extra power consumption and may interfere reception of dedicated H-RNTI transmission for certain UE or simply disturb scheduling. Therefore, grouping or another method may be needed to alleviate the possible problems.

In addition, when MAC-c PDU is used as MAC-hs SDU and common H-RNTI is needed, extra overhead such as UE ID, UE ID type, or even possible TCTF (Target Channel Type Field), e.g. only DCCH/DTCH or CCCH/CTCH be accommodated onto HS-DSCH, and C/T field are unnecessarily introduced. The definitions of the abovementioned fields can be found in related protocol specification, and will not be narrated hereinafter.

Furthermore, when dedicated H-RNTI (or equivalent to U-RNTI) is used for DCCH/DTCH transmission in a HS-SCCH frame and MAC-d PDU is used as MAC-hs SDU for each UE in CELL_FACH state, Node B needs to maintain UEs H-RNTI. However, multiple UEs' data cannot be multiplexed into a single TTI.

This in mind, the present invention aims at providing a method and apparatus for enhancing system efficiency in a wireless communications system, for decreasing overhead and transmission time, and enhancing system efficiency.

This is achieved by a method and apparatus for handling reset in a wireless communications system according to claims 1, 4, 7, 12, 15, 18, 21, and 26. The dependent claims pertain to corresponding further developments and improvements.

As will be seen more clearly from the detailed description following below, the claimed method for enhancing system efficiency in a wireless communications system comprises allocating a plurality of common H-RNTIs to a plurality of UEs groups each comprising zero or at least one UE, and each UE of a UE group maintaining, acquiring, or being assigned, configured, or signalled a common H-RNTI of the plurality of common H-RNTIs when the UE group operates in a CELL_FACH state.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 to Fig. 6 are flowcharts of processes according to the embodiment of the present invention.

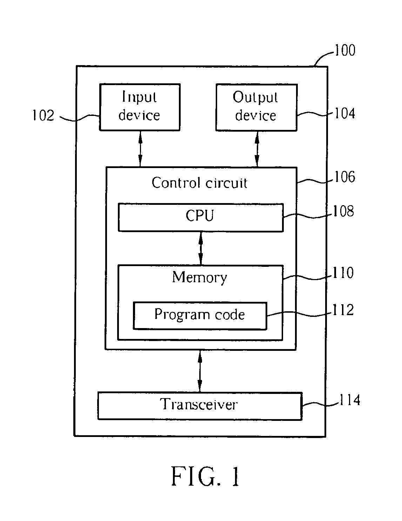

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

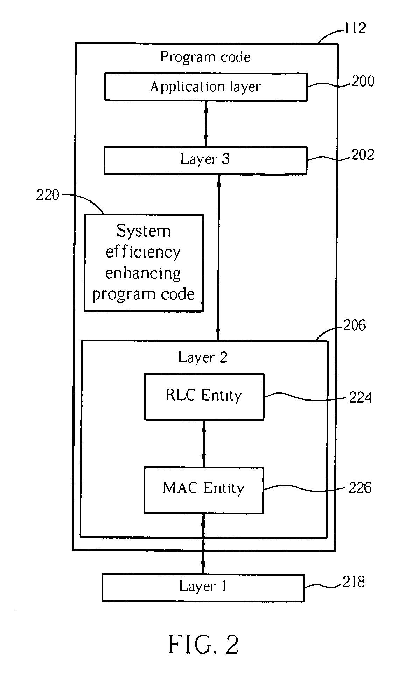

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. A primary function of the RLC entity 224 is providing different transmission quality processing, performing segmentation, reassembly, concatenation, padding, retransmission, sequence check, and duplication detection on transmitted data or control instructions based on different transmission quality requirements. The MAC entity 226 can match packets received from different logic channels of the RLC entity 224 to common, shared, or dedicated transport channels according to radio resource allocation commands of the Layer 3 (RRC layer) 202, for performing channel mapping, multiplexing, transport format selection, or random access control.

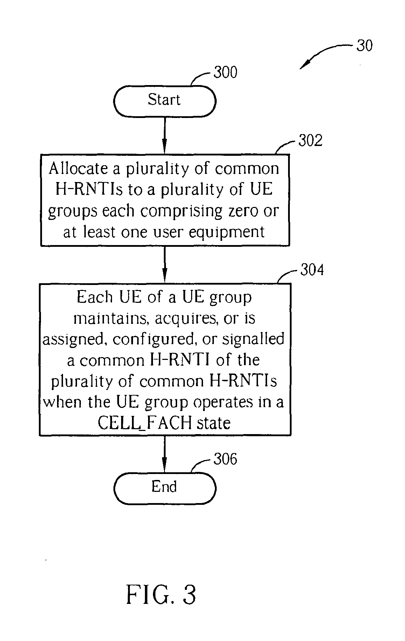

As mentioned above, the prior art also adds HSDPA-like functions into CELL_FACH to enhance efficiency of CELL_FACH state, so that UE in CELL_FACH can use HS-DSCH, to improve peak data rate, signaling delay, state transition delay, download times and flexible cell capacity in CELL_FACH. In such a situation, the embodiment of the present invention provides a system efficiency enhancing program code 220, to reduce signaling and enhance system efficiency. Please refer to Fig. 3, which illustrates a schematic diagram of a process 30 according to an embodiment of the present invention. The process 30 is utilized for enhancing system efficiency in a wireless communications system, and can be compiled into the system efficiency enhancing program code 220. The process 30 comprises the following steps:
- Step 300:: Start.
- Step 302:: Allocate a plurality of common H-RNTIs to a plurality of UE groups each comprising zero or at least one user equipment.
- Step 304:: Each UE of a UE group maintains, acquires, or is assigned, configured, or signalled a common H-RNTI of the plurality of common H-RNTIs when the UE group operates in a CELL_FACH state.
- Step 306:: End.

According to the process 30, each common H_RNTI is allocated to a UE group, and when a UE group operates in CELL_FACH, each UE of the UE group maintains, acquires, or is assigned, configured, or signalled a common H-RNTI. In such a situation, if the common H_RNTI is used for transmission of DCCH and DTCH, each UE in CELL_FACH receives HS-PDSCH transmission with the common H_RNTI, so as to prevent extra power consumption, prevent from interfering reception of dedicated H-RNTI transmission, and maintain scheduling.

Preferably, the embodiment of the present invention allocates the plurality of common H-RNTIs to the plurality of UE groups according to service class, location, mobility, QoS requirement, serving public land mobile network, or under similar transmission condition, CQI. Meanwhile, the number of most significant bits and least significant bits in each common H-RNTI of the plurality of common H-RNTIs can be utilized for representing group identifier of the corresponding UE group.

Therefore, according to the process 30, each UE of the same UE group maintains, acquires, or is assigned, configured, or signalled a common H-RNTI, so as to prevent extra power consumption, to prevent from interfering reception of dedicated H-RNTI transmission, to maintain scheduling, and to enhance system efficiency.

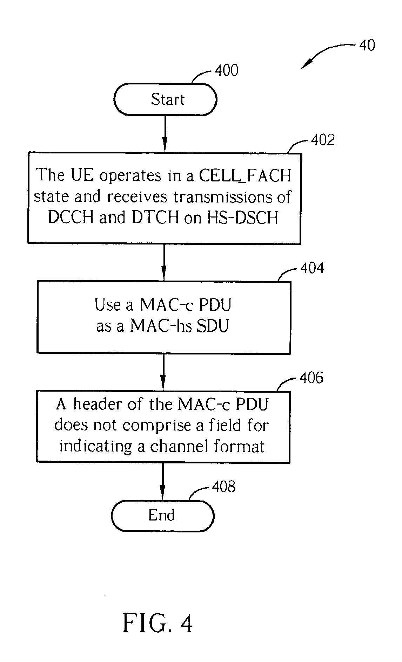

Please refer to Fig. 4, which illustrates a schematic diagram of a process 40 according to an embodiment of the present invention. The process 40 is utilized for enhancing system efficiency of a UE in a wireless communications system, and can be compiled into the system efficiency enhancing program code 220. The process 40 comprises the following steps:
- Step 400:: Start.
- Step 402:: The UE operates in a CELL_FACH state and receives transmissions of DCCH and DTCH on HS-DSCH.

- Step 404:: Use a MAC-c PDU as a MAC-hs SDU.
- Step 406:: A header of the MAC-c PDU does not comprise a field for indicating a channel format.
- Step 408:: End.

According to the process 40, when a UE operates in CELL_FACH and receives transmissions of DCCH and DTCH on HS-DSCH, if a MAC-c PDU is used as a MAC-hs SDU, the header of the MAC-c PDU does not need to comprise a field for indicating a channel format, to reduce overhead, and to enhance system efficiency.

Preferably, in the embodiment of the present invention, the field for indicating the channel format can be TCTF (Target Channel Type Field) and/or C/T field.

Therefore, via the process 40, when UE in CELL_FACH receives transmission of DCCH and DTCH on HS-DSCH, and MAC-c PDU is used as MAC-hs SDU, the header of the MAC-c PDU does not comprises fields for indicating the channel format, so as to reduce overhead, and enhance system efficiency.

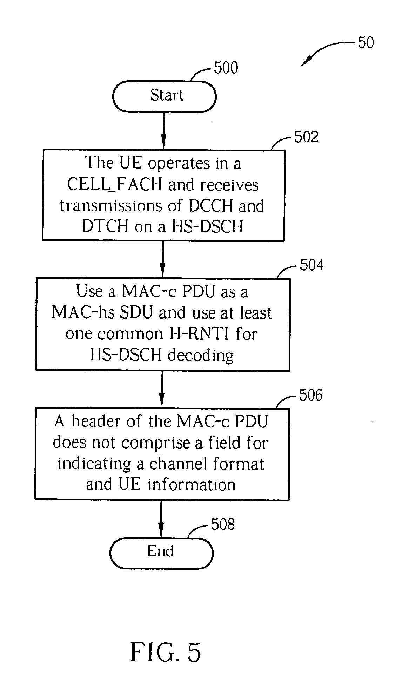

Please refer to Fig. 5, which illustrates a schematic diagram of a process 50 according to an embodiment of the present invention. The process 50 is utilized for enhancing system efficiency of a UE in a wireless communications system, and can be compiled into the system efficiency enhancing program code 220. The process 50 comprises the following steps:
- Step 500:: Start.
- Step 502:: The UE operates in a CELL_FACH and receives transmissions of DCCH and DTCH on a HS-DSCH.
- Step 504:: Use a MAC-c PDU as a MAC-hs SDU and use at least one common H-RNTI for HS-DSCH decoding.
- Step 506:: A header of the MAC-c PDU does not comprise a field for indicating a channel format and UE information.
- Step 508:: End.

According to the process 50, when a UE operates in CELL_FACH and receives transmissions of DCCH and DTCH on HS-DSCH, if a MAC-c PDU is used as a MAC-hs SDU and at least one common H-RNTI is used for HS-DSCH decoding, the header of the MAC-c PDU does not need to comprise fields for indicating a channel format and UE information, to reduce overhead, and to enhance system efficiency.

Preferably, in the embodiment of the present invention, the field for indicating the channel format can be TCTF and/or C/T field, while the field for indicating the UE information can be UE ID indicator field and/or E ID type indicator field.

Therefore, via the process 50, when UE in CELL_FACH receives transmissions of DCCH and DTCH on HS-DSCH, and the MAC-c PDU is used as the MAC-hs SDU, as well as at least on common H_RNTI is used for HS-DSCH decoding, the header of the MAC-c PDU does not comprise the fields for indicating the channel format and UE information, so as to reduce overhead, and to enhance system efficiency.

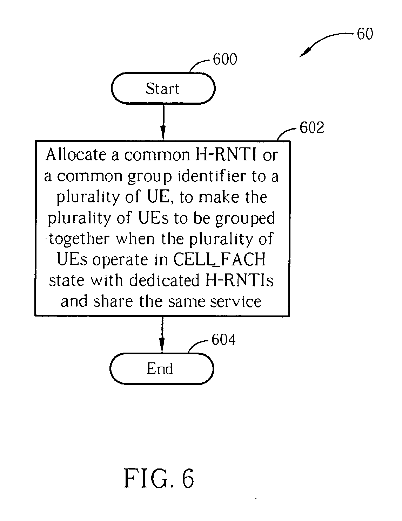

Please refer to Fig. 6, which illustrates a schematic diagram of a process 60 according to an embodiment of the present invention. The process 60 is utilized for enhancing system efficiency in a wireless communications system, and can be compiled into the system efficiency enhancing program code 220. The process 60 comprises the following steps:
- Step 600:: Start.
- Step 602:: Allocate a common H-RNTI or a common group identifier to a plurality of UEs to make the plurality of UEs to be grouped together when the plurality of UEs operate in CELL_FACH state with dedicated H-RNTIs and share the same service.
- Step 604:: End.

According to the process 60, when UEs with different dedicated H-RNTI operate in CELL_FACH and share the same service, the embodiment of the present invention allocates a common H-RNTI or a common group identifier to the UEs, to make the UEs to be grouped together. In such a situation, since the UEs are grouped together, multiple UEs' data can be multiplexed into a single TTI without extra group ID or replacing UE ID and UE ID type fields by other fields, so as to reduce overhead, and to enhance system efficiency.

Preferably, in the embodiment of the present invention, the service is transmissions of DCCH and DTCH. Furthermore, the embodiment of the present invention can multiplex the data for the UEs together on a HS-PDSCH with the common H-RNTI, to reduce overhead, and to enhance system efficiency.

In summary, the embodiment of the present invention can improve operations of CELL_FACH, so as to enhance system efficiency.

## Claims

1. A method for enhancing system efficiency in a wireless communications system comprising:
allocating a plurality of common High Speed Downlink Shared Channel radio network transaction identifiers, called common H-RNTIs hereinafter, to a plurality of user equipment, called UE hereinafter, groups each comprising zero or at least one user equipment (302);
**characterized by** each UE of a UE group maintaining, acquiring, or being assigned, configured, or signalled a common H-RNTI of the plurality of common H-RNTIs when the UE group operates in a Cell Forward Link Access Channel, called CELL_FACH hereinafter, state (304).

2. The method of claim 1, **characterized in that** allocating the plurality of common H-RNTIs to the plurality of UE groups is allocating the plurality of common H-RNTIs to the plurality of UE groups according to service class, location, mobility, QoS requirement, serving public land mobile network, or under similar transmission condition, channel quality identifier.

3. The method of claim 1, **characterized in that** a number of most significant bits and least significant bits in a common H-RNTI of the plurality of common H-RNTIs represents group identifier of a corresponding UE group.

4. A method for enhancing system efficiency of a user equipment, called UE hereinafter, in a wireless communications system comprising:
the UE operating in a Cell Forward Link Access Channel, called CELL_FACH hereinafter, state and receiving transmissions of Dedicated Control Channel, called DCCH hereafter, and Dedicated Traffic Channel, called DTCH hereinafter, on a High Speed Downlink Shared Channel, called HS-DSCH hereinafter (402); and
using a common Media Access Control, called MAC-c, Protocol Data Unit, called PDU hereinafter, as a high speed MAC, called MAC-hs hereinafter, Service Data Unit, called SDU hereinafter (404);
**characterized by** a header of the MAC-c PDU not comprising a field for indicating a channel format (406).

5. The method of claim 4, **characterized in that** the field is a Target Channel Type Field.

6. The method of claim 4, **characterized in that** the field is a C/T field.

7. A method for enhancing system efficiency of a user equipment, called UE hereinafter, in a wireless communications system comprising:
the UE operating in a Cell Forward Link Access Channel, called CELL_FACH hereinafter, state and receiving transmissions of Dedicated Control Channel, called DCCH hereafter, and Dedicated Traffic Channel, called DTCH hereinafter, on a High Speed Downlink Shared Channel, called HS-DSCH hereinafter (502); and
using a common Media Access Control, called MAC-c, Protocol Data Unit, called PDU hereinafter, as a high speed MAC, called MAC-hs hereinafter, Service Data Unit, called SDU hereinafter, and using at least one common High Speed Downlink Shared Channel radio network transaction identifier, called common H-RNTI hereinafter, for HS-DSCH decoding (504);
**characterized by** a header of the MAC-c PDU not comprising fields for indicating a channel format and UE information (506).

8. The method of claim 7, **characterized in that** the field is a Target Channel Type Field.

9. The method of claim 7, **characterized in that** the field is a C/T field.

10. The method of claim 7, **characterized in that** the field is a UE ID indicator field.

11. The method of claim 7, **characterized in that** the field is a UE ID type indicator field.

12. A method for enhancing system efficiency in a wireless communications system comprising:
a plurality of user equipments, called UEs hereinafter, operate in a Cell Forward Link Access Channel, called CELL_FACH hereinafter, state with dedicated H-RNTIs and share the same service;
**characterized by** allocating a common High Speed Downlink Shared Channel radio network transaction identifier, called common H-RNTI, or a common group identifier to the plurality of UE to make the plurality of UEs to be grouped together (602).

13. The method of claim 12, **characterized in that** the service is transmissions of Dedicated Control Channel, called DCCH hereafter, and Dedicated Traffic Channel, called DTCH hereinafter.

14. The method of claim 12 further comprising multiplexing the data for the plurality of UEs together on a High Speed Physical Downlink Shared Channel, called HS-PDSCH hereinafter, with the common H-RNTI.

15. A communications device (100) of a wireless communications system utilized for enhancing system efficiency comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
allocating a plurality of common High Speed Downlink Shared Channel radio network transaction identifiers, called common H-RNTIs hereinafter, to a plurality of user equipment, called UE hereinafter, groups each comprising zero or at least one UE (302);
**characterized by** each UE of a UE group maintaining, acquiring, or being assigned, configured, or signalled a common H-RNTI of the plurality of common H-RNTIs when the UE group operates in a Cell Forward Link Access Channel, called CELL_FACH hereinafter, state (304).

16. The communications device of claim 15, **characterized in that** allocating the plurality of common H-RNTIs to the plurality of UE groups is allocating the plurality of common H-RNTIs to the plurality of UE groups according to service class, location, mobility, QoS requirement, serving public land mobile network, or under similar transmission condition, channel quality identifier.

17. The communications device of claim 15, **characterized in that** a number of most significant bits and least significant bits in a common H-RNTI of the plurality of common H-RNTIs represents group identifier of a corresponding UE group.

18. A communications device (100) of a wireless communications system utilized for enhancing system efficiency comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
the communications device operating in a Cell Forward Link Access Channel, called CELL_FACH hereinafter, state and receiving transmissions of Dedicated Control Channel, called DCCH hereafter, and Dedicated Traffic Channel, called DTCH hereinafter, on a High Speed Downlink Shared Channel, called HS-DSCH hereinafter (402); and
using a common Media Access Control, called MAC-c, Protocol Data Unit, called PDU hereinafter, as a high speed MAC, called MAC-hs hereinafter, Service Data Unit, called SDU hereinafter (404);
**characterized by** a header of the MAC-c PDU not comprising a field for indicating a channel format (406).

19. The communications device of claim 18, **characterized in that** the field is a Target Channel Type Field.

20. The communications device of claim 18, **characterized in that** the field is a C/T field.

21. A communications device (100) of a wireless communications system utilized for enhancing system efficiency comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
the communications device operating in a Cell Forward Link Access Channel, called CELL_FACH hereinafter, state and receiving transmissions of Dedicated Control Channel, called DCCH hereafter, and Dedicated Traffic Channel, called DTCH hereinafter, on a High Speed Downlink Shared Channel, called HS-DSCH hereinafter (502);
using a common Media Access Control, called MAC-c, Protocol Data Unit, called PDU hereinafter, as a high speed MAC, called MAC-hs hereinafter, Service Data Unit, called SDU hereinafter, and using at least one common High Speed Downlink Shared Channel radio network transaction identifier, called common H-RNTI hereinafter, for HS-DSCH decoding (504); and
**characterized by** a header of the MAC-c PDU not comprising fields for indicating a channel format and UE information (506).

22. The communications device of claim 21, **characterized in that** the field is a Target Channel Type Field.

23. The communications device of claim 21, **characterized in that** the field is a C/T field.

24. The communications device of claim 21, **characterized in that** the field is a UE ID indicator field.

25. The communications device of claim 21, **characterized in that** the field is a UE ID type indicator field.

26. A communications device (100) of a wireless communications system utilized for enhancing system efficiency comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
a plurality of user equipments, called UEs hereinafter, operate in a Cell Forward Link Access Channel, called CELL_FACH hereinafter, state with dedicated H-RNTIs and share the same service;
**characterized by** allocating a common High Speed Downlink Shared Channel radio network transaction identifier, called common H-RNTI, or a common group identifier to the plurality of UE to make the plurality of UEs to be grouped together (602).

27. The communications device of claim 26, **characterized in that** the service is transmissions of Dedicated Control Channel, called DCCH hereafter, and Dedicated Traffic Channel, called DTCH hereinafter.

28. The communications device of claim 26, **characterized in that** the program code further comprises multiplexing the data for the plurality of UEs together on a High Speed Physical Downlink Shared Channel, called HS-PDSCH hereinafter, with the common H-RNTI.
